(19) Europäisches Patentamt
European Patent Office
Office européen des brevets

(11) EP 3 523 364 B1

(12) EUROPÄISCHE PATENTSCHRIFT

(45) Veröffentlichungstag und Bekanntmachung des Hinweises auf die Patenterteilung:
**11.05.2022 Patentblatt 2022/19**

(21) Anmeldenummer: **17784843.9**

(22) Anmeldetag: **04.10.2017**

(51) Internationale Patentklassifikation (IPC):
***C08J 9/28*** *(2006.01)* ***C08L 33/16*** *(2006.01)*

(52) Gemeinsame Patentklassifikation (CPC):
**C08L 33/16; C08J 9/28;** C08J 2201/026; C08J 2201/0502; C08J 2201/0543; C08J 2205/042; C08J 2205/044; C08J 2205/052; C08J 2300/102; C08J 2333/16

(86) Internationale Anmeldenummer:
**PCT/EP2017/001171**

(87) Internationale Veröffentlichungsnummer:
**WO 2018/065094 (12.04.2018 Gazette 2018/15)**

(54) **HOCHFLUORIERTE NANOSTRUKTURIERTE POLYMERSCHÄUME ZUR HERSTELLUNG SUPERABWEISENDER OBERFLÄCHEN**

HIGHLY FLUORINATED NANOSTRUCTURED POLYMER FOAMS FOR PRODUCING SUPER-REPELLENT SURFACES

MOUSSE POLYMÈRE NANOSTRUCTURÉE HAUTEMENT FLUORÉE DESTINÉE À LA FABRICATION DE SURFACES SUPER-DÉPERLANTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2016 DE 102016012001**

(43) Veröffentlichungstag der Anmeldung:
**14.08.2019 Patentblatt 2019/33**

(73) Patentinhaber: **Karlsruher Institut für Technologie
76131 Karlsruhe (DE)**

(72) Erfinder:
- **RAPP, Bastian
76135 Karlsruhe (DE)**
- **HELMER, Dorothea
76135 Karlsruhe (DE)**
- **RICHTER, Christiane
53175 Bonn (DE)**
- **KELLER, Nico
68790 St. Leon-Rot (DE)**

(74) Vertreter: **Müller-Boré & Partner
Patentanwälte PartG mbB
Friedenheimer Brücke 21
80639 München (DE)**

(56) Entgegenhaltungen:
**CN-A- 104 231 211 CN-A- 105 418 837
US-B2- 7 615 283**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 523 364 B1

## Beschreibung

Die vorliegende Erfindung betrifft einen hochfluorierten nanostrukturierten Polymerschaum sowie dessen Verwendung als superabweisende Beschichtung von Substraten. Ferner betrifft die vorliegende Erfindung eine Zusammensetzung und ein Verfahren zur Herstellung des hochfluorierten nanostrukturierten Polymerschaumes.

Superabweisende Oberflächen stellen Oberflächen dar, von denen sowohl Wasser als auch Öle und organische Lösungsmittel abperlen. Sie sind demnach sowohl hydrophob als auch oleophob. Anwendungen finden superabweisende Oberflächen unter anderem in Form von technischen Oberflächenbeschichtungen, Glasbeschichtungen, Gewebebeschichtungen und werden so unter anderem in der Outdoor-Industrie, Automobilindustrie und Pharmaindustrie eingesetzt.

Als Maß für die Benetzungsfähigkeit einer Oberfläche mit einer Flüssigkeit dient dabei der Kontaktwinkel, den ein Tropfen der Flüssigkeit zu dieser Oberfläche ausbildet. Hydrophobe Oberflächen weisen einen Kontaktwinkel von Wasser > 90° auf, wobei superhydrophobe Oberflächen einen Kontaktwinkel von Wasser > 140° aufweisen. Analog gilt für oleophobe Oberflächen, dass sie einen Kontaktwinkel von Ölen > 90° aufweisen, wobei superoleophobe Oberflächen einen Kontaktwinkel > 140° aufweisen. Um solche Kontaktwinkel auf einer Oberfläche zu erreichen, bedarf es einer Herabsetzung der freien Oberflächenenergie jener Oberfläche. Der Grund hierfür liegt im Zusammenhang mit dem Kontaktwinkel, wie er in der Youngschen Gleichung (1) zum Ausdruck kommt:

$$\cos\theta = \frac{\gamma_{\text{gas/solid}} - \gamma_{\text{liquid/solid}}}{\gamma_{\text{gas/liquid}}} \approx \frac{\gamma_{\text{solid}} - \gamma_{\text{liquid/solid}}}{\gamma_{\text{liquid}}} \qquad (1)$$

wobei $\theta$ der sich ausbildende Kontaktwinkel und die jeweiligen $\gamma$ die freien Oberflächenenergien der drei Grenzflächen zwischen umgebender Gasatmosphäre ("gas"), Flüssigkeit ("liquid") und Substratoberfläche ("solid") sind. Dabei können die freien Oberflächenenergien an der Grenzfläche Gas/Oberfläche und Gas/Flüssigkeit durch die freien Oberflächenenergien der Oberfläche bzw. der Flüssigkeit approximiert werden. Diese Werte können entweder gemessen oder aus Tabellenwerken entnommen werden. Einzig die Größe $\gamma_{\text{liquid/solid}}$ muss durch ein geeignetes Modell approximiert werden, wobei sich hier das Modell von Fowkes bewährt hat, welches für $\gamma_{\text{liquid/solid}}$ folgenden Ausdruck (2) annimmt:

$$\gamma_{\text{liquid/solid}} = \gamma_{\text{liquid}} + \gamma_{\text{solid}} - 2\sqrt{\gamma_{\text{liquid}} \cdot \gamma_{\text{solid}}} \qquad (2)$$

Kombiniert man Gleichungen (1) und (2), so erhält man:

$$\cos\theta = \frac{\gamma_{\text{solid}} - \gamma_{\text{liquid/solid}}}{\gamma_{\text{liquid}}} = \frac{\gamma_{\text{solid}} - \left(\gamma_{\text{liquid}} + \gamma_{\text{solid}} - 2\sqrt{\gamma_{\text{liquid}} \cdot \gamma_{\text{solid}}}\right)}{\gamma_{\text{liquid}}}$$

$$\cos\theta = \frac{-\gamma_{\text{liquid}} + 2\sqrt{\gamma_{\text{liquid}} \cdot \gamma_{\text{solid}}}}{\gamma_{\text{liquid}}} \qquad (3)$$

Wenn eine Oberfläche für eine Flüssigkeit abweisend sein soll, dann muss der Kontaktwinkel im Grenzfall > 90° betragen. Der Cosinus ist für $\theta$ > 90° negativ, daher ergibt sich für Gleichung (3):

$$\frac{-\gamma_{\text{liquid}} + 2\sqrt{\gamma_{\text{liquid}} \cdot \gamma_{\text{solid}}}}{\gamma_{\text{liquid}}} < 0$$

$$2\sqrt{\gamma_{\text{liquid}} \cdot \gamma_{\text{solid}}} < \gamma_{\text{liquid}}$$

$$4 \cdot \gamma_{\text{solid}} < \gamma_{\text{liquid}}$$

$$\gamma_{\text{solid}} < \frac{1}{4} \cdot \gamma_{\text{liquid}} \qquad (4)$$

Aus Gleichung (4) ist ersichtlich, dass eine Oberfläche mit einer freien Oberflächenenergie von weniger als einem Viertel der freien Oberflächenenergie der Flüssigkeit für diese Flüssigkeit abweisend wird. Wasser mit einer freien Oberflächenenergie von 71 mN/m wird demnach auf Oberflächen mit weniger als 17 mN/m abgewiesen. Für Öle und organische Lösungsmittel mit freien Oberflächenenergien im Bereich von 20 bis 25 mN/m sind Oberflächen erforderlich, die freie Oberflächenenergien von bis zu höchstens bzw. $\leq$ 5 mN/m aufweisen.

Eine Herabsetzung der freien Oberflächenenergie lässt sich durch Verwendung hochfluorierter Materialien erreichen. Daneben bedarf es allerdings noch einer mikro- bzw. nanoskaligen Rauigkeit, welche dafür sorgt, dass Luft an der Oberfläche gehalten wird. Letzteres ist notwendig, da das Benetzungsmodell nach Young von einem Dreiphasensystem ausgeht. Wird die Luft von der Oberfläche verdrängt, besitzt die Youngsche Gleichung keine Gültigkeit mehr und der superabweisende Effekt der Oberfläche geht trotz ihrer geringen freien Oberflächenenergie verloren. Entsprechend müssen Oberflächen, von denen sowohl Wasser als auch Öle und organische Lösungsmittel abperlen sollen, sowohl eine ausreichend niedrige freie Oberflächenenergie als auch eine geeignete mikro- bzw. nanoskalige Rauigkeit aufweisen.

Im Stand der Technik sind Beispiele bekannt, in denen poröse hochfluorierte Substrate mittels Abscheidung von funktionalisierten Nanopartikeln hergestellt werden. Diese Nanopartikel werden in einem ersten Schritt beispielsweise mittels Silanisierung unter Verwendung geeigneter Perfluoralkylsilane fluoriert. Die Partikel bilden dabei Substrate, die ähnlich einer Pulverschüttung Hohlräume mit geeigneten Porendurchmessern aufweisen. Beispiele hierfür sind WO 2009/118552 A1 zu entnehmen. Auch die Herstellung dieser Partikel mittels eines Elektrosprayverfahrens *in situ* ist im Stand der Technik beschrieben, beispielsweise in US 2006/0246297 A1.

Häufig werden raue Oberflächen mittels Elektropolymerisation hergestellt. Dabei können mitunter auch direkt fluorierte Monomere verwendet werden. Beispiele für elektropolymerisierte Substrate sind in US 2006/0029808 A1 zu finden.

Ein weiteres Verfahren Oberflächen mit ausreichender Mikro- bzw. Nanorauigkeit herzustellen besteht im anionischen Ätzen von Metalloberflächen. Diese Verfahren gehören zu den ersten Ansätzen, mit denen superabweisende Oberflächen hergestellt worden sind. Beispiele hierzu sind von Shafiei und Alpas (Applied Surface Science 2009, 256, 710-719) beschrieben.

Ein weiteres Verfahren, mit dem ausreichend poröse Strukturen hergestellt werden können, sind Sol-Gel-Ansätze, wie beispielsweise von Taurino et al. (Journal of Colloid and Interface Science 2008, 325, 149-156) beschrieben.

Auch Gemische aus Polymermatrizes und fluorierten Nanopartikeln sind im Stand der Technik bekannt. Beispiele hierfür finden sich in US 8,017,234 B2, US 2011/0263751 A1, US 2010/0004373 A1 und WO 2010/018744 A1. Mitunter können Nanopartikel nachträglich mittels eines Lösungsmittelprozesses in eine zuvor auf der Oberfläche aufgebrachte Polymerschicht eingebracht werden. Ein solches Verfahren ist beispielsweise in US 2002/0150723 A1 beschrieben.

Ferner sind im Stand der Technik Verfahren bekannt, welche zunächst das Herstellen einer Mikrostruktur vorsehen, die in einem zweiten Schritt mit einer Nanostruktur überschichtet wird. Die Herstellung solcher hierarchischer Strukturen ist beispielsweise über eine Materialabscheidung oder über eine selektive Materialherauslösung auf bzw. aus einer in einem ersten Schritt hergestellten Mikrostruktur möglich. Die Strukturen werden meist in einem Nachbehandlungsschritt fluoriert. Beispiele für solche Verfahren sind in US 8,137,751 B2 und in WO 2012/012441 A1 zu finden.

Ebenfalls möglich ist die Einbringung einer zweiten Strukturebene auf Partikeln, wie beispielsweise von Perro et. al. (Colloids and Surfaces A: Physicochemical and Engineering Aspects 2006, 284-285, 78-83) beschrieben. Hierbei werden Partikel hergestellt, die eine definierte Oberflächenstrukturierung aufweisen. Durch die Kombination der Partikel, welche die erste Strukturebene bilden, und der auf den Partikeln aufgebrachten Struktur, welche die zweite Strukturebene bildet, können superabweisende Oberflächen hergestellt werden. Zumeist müssen diese Partikel dann in einem abschließenden Schritt fluoriert werden.

Ebenfalls beschrieben sind Ansätze, bei denen ein Substrat aus zwei Materialien besteht, die selektiv geätzt werden können. Dabei wird zumeist in einem ersten Schritt ein Beschichtungsverbund aus zwei Materialien aufgebracht und in einem zweiten Schritt eines der beiden Materialien durch ein geeignetes Ätzmittel selektiv entfernt. Auf diese Weise kann ebenfalls eine superabweisende Oberfläche entstehen. Beispiele hierfür sind in US 8,741,158 B2 beschrieben. Die Beschichtungen werden mitunter auch auf eine zuvor hergestellte Mikrostruktur appliziert. Beispiele hierfür sind in US 2006/0024508 A1 zu finden. Eine Modifikation dieses Verfahrens verwendet ein Gemisch aus einer anorganischen Matrix, z.B. Silika, und einer organischen Matrix, meist ein Polymer, die zusammen mittels Dipcoating aufgebracht werden können. Das Substrat wird sodann erhitzt und die organische Matrix ausgebrannt. Gleichzeitig kalziniert die anorganische Matrix und bildet daraufhin eine poröse glasähnliche Struktur. Diese kann in einem zweiten Schritt, beispielsweise mittels Silanisierung unter Verwendung geeigneter Perfluoralkylsilane, fluoriert werden, wodurch eine

superabweisende Beschichtung entsteht. Beispiele für dieses Verfahren sind von Li et al. (Chemical Communications 2009, 2730-2732) beschrieben.

Eine weitere Variante, superabweisende Oberflächen gänzlich über Kalzinierung herzustellen, ist von Deng et al. (Science 2012, 335, 67-70) beschrieben. Hier wird über eine Rußabscheidung eine Oberfläche mit geeigneter Rauigkeit hergestellt, die im nächsten Schritt mittels Gasphasenabscheidung mit einem Silan überschichtet wird, welches anschließend kalziniert wird. Auf der mikro- bzw. nanoskalig rauen Oberfläche wird dann mittels Gasphasenfluorierung eine ausreichend niederenergetische Oberfläche erzeugt.

Neben der Herstellung superabweisender Oberflächen auf Basis von Nanopartikeln gibt es auch Beispiele zur Herstellung entsprechender Oberflächen unter Verwendung von Nanofäden, sog. Nanowires, die beispielsweise mittels Gasphasenabscheidung oder Elektrospinning hergestellt werden können. Diese Nanofäden können in einem zweiten Schritt mittels eines Gasphasenprozesses funktionalisiert und somit fluoriert werden. Beispiele hierfür sind US 2011/0229667 A1 und US 7,985,475 B2 zu entnehmen.

Ebenfalls im Stand der Technik bekannt sind Verfahren, die ein hochfluoriertes Substrat, beispielsweise ein Fluorpolymer, mittels Replikationstechnik strukturieren und so die notwendige Rauigkeit einbringen. Beispiele hierfür sind von Vogelaar et al. (Langmuir 2006, 22, 3125-3130) beschrieben.

Die vorstehend genannten Verfahren aus dem Stand der Technik verfolgen demnach größtenteils entweder einen "Top-Down-Ansatz" oder einen "Bottom-Up-Ansatz".

Bei "Top-Down-Ansätzen" werden nanostrukturierte Oberflächen mit ausreichend niedriger freier Oberflächenenergie mittels eines Replikationsprozesses erzeugt. Hierbei wird ein nanostrukturiertes Formwerkzeug in ein Material mit ausreichend niedriger freier Oberflächenenergie umkopiert. Bei diesen Ansätzen wird folglich eine bereits bestehende Schicht eines Materials mit niedriger freier Oberflächenenergie, typischerweise ein Fluorpolymer, "von oben" strukturiert. Nachteilig an diesen Ansätzen ist vor allem, dass die Replikation meist nur eine sehr geringe Eindring- und damit Effekttiefe erreicht. Unter Effekttiefe wird hierbei die Substratdicke verstanden, auf welcher der superabweisende Effekt wirkt. Im Wesentlichen handelt es sich dabei um Größenordnungen im Bereich weniger 10 bis 100 $\mu$m. Ferner müssen bei diesen Ansätzen thermoplastische Fluorpolymere eingesetzt werden, da die erforderliche mechanische Umstrukturierung nur erfolgen kann, wenn das Polymernetzwerk chemisch nicht vernetzt ist. Da thermoplastische Fluorpolymere im Allgemeinen sehr weich sind, weisen die so erhaltenen strukturierten Oberflächen eine hohe mechanische Anfälligkeit auf.

Bei "Bottom-Up-Ansätzen" wird hingegen zunächst durch ein geeignetes Verfahren eine Oberfläche mit einer geeigneten Rauigkeit in einem beliebigen Material erzeugt. In einem zweiten Verfahrensschritt wird diese Oberfläche in ihrer freien Oberflächenenergie so verändert, dass die Oberfläche abweisend wird. Häufig ist dieser zweite Schritt eine Gasphasenfunktionalisierung, beispielsweise eine Fluorierung. Als geeignete Reagenzien stehen hier beispielsweise fluorierte Silane zur Verfügung, die mittels Bedampfung oder Beprobung in der flüssigen Phase auf die Oberfläche appliziert werden. Nachteilig an diesen Ansätzen ist, dass die Rauigkeit der erzeugten Oberfläche häufig ebenfalls eine beschränkte Effekttiefe hat. So kann beispielsweise mittels Abscheidung von Nanopartikeln häufig nur eine Schichtdicke von wenigen Mikrometern erreicht werden. Dickere Schichten werden häufig mechanisch instabil. Sie neigen zur Rissbildung oder werden lichtstreuend, d.h. intransparent. Insbesondere der zweite Verfahrensschritt stellt bei "Bottom-Up-Ansätzen" den begrenzenden Faktor dar. Die nachträgliche Funktionalisierung, welche üblicherweise eine Fluorierung darstellt, erreicht lediglich eine beschränkte Eindringtiefe. So erlauben Dampfphasenprozesse nur ein bedingtes Ein- und Austragen von Reagenzien beispielsweise in eine Nanostruktur hinein bzw. aus einer Nanostruktur heraus. Die Limitierung stellt hierbei der Massen- und Diffusionstransport innerhalb der Struktur dar. Daher ist auch hier die Effekttiefe auf wenige Mikrometer beschränkt.

Bei "Bottom-Up-Ansätzen" ergibt sich demnach das gleiche Problem wie bei "Top-Down-Ansätzen": Die beschränkte Effekttiefe erlaubt es nicht, Oberflächen herzustellen, die für praktische Anwendungen mechanisch ausreichend stabil sind. Auch hier würde ein einfaches Kratzen mit dem Schlüssel oder mit dem Fingernagel die funktionale Struktur der Oberfläche entfernen und den superabweisenden Effekt zerstören. Bedingt durch die Tatsache, dass nanoskalige Strukturen, vor allem wenn sie aus adsorbierten oder selbst-assemblierten Partikeln bestehen, eine sehr geringe mechanische Stabilität aufweisen, sind die aus "Bottom-Up-Ansätzen" erhaltenen Schichten meist noch weniger robust als die mittels "Top-Down-Ansätzen" hergestellten Strukturen.

Bei den im Stand der Technik beschriebenen Verfahren ist der superabweisende Effekt demnach auf jene Tiefe beschränkt, welche sich im Rahmen des entsprechenden "Top-Down-Ansatzes" bzw. "Bottom-Up-Ansatzes" strukturieren lässt. Ist die superabweisende Oberfläche mechanischen Belastungen wie etwa Abrasion, beispielsweise durch Witterungseinflüsse, ausgesetzt, kommt es nach und nach zu einem Materialabtrag in der Größenordnung der Effekttiefe, wodurch die superabweisende Eigenschaft der Oberfläche schließlich gänzlich verloren geht.

CN 105 418 837 A offenbart ein Herstellungsverfahren für ein poröses superhydrophobes Beschichtungsmaterial aus Hexafluorbutylmethacrylat.

Der vorliegenden Erfindung liegt somit die Aufgabe zugrunde, einen hochfluorierten nanostrukturierten Polymerschaum zur Herstellung superabweisender Oberflächen bereitzustellen, wobei die superabweisende Eigenschaft

des Polymerschaumes nicht auf seine Oberfläche beschränkt sein soll, sondern innerhalb seiner gesamten Schichtdicke bestehen bleiben soll.

Diese Aufgabe wird durch die in den Ansprüchen gekennzeichneten Ausführungsformen der vorliegenden Erfindung gelöst.

Insbesondere wird erfindungsgemäß ein hochfluorierter nanostrukturierter Polymerschaum bereitgestellt, der eine Dichte von höchstens bzw. $\leq$ 2,2 g/mL sowie eine freie Oberflächenenergie von höchstens bzw. $\leq$ 5 mN/m aufweist, wobei der Fluorgehalt mindestens 40 mol% beträgt. Ferner weist der hochfluorierte nanostrukturierte Polymerschaum erfindungsgemäß über das gesamte Volumen homogen verteilte Hohlräume mit Abmessungen von höchstens bzw. $\leq$ 5 $\mu$m auf. Weiterhin weist der hochfluorierte nanostrukturierte Polymerschaum erfindungsgemäß eine um mindestens bzw. $\geq$ 1% geringere Dichte als das unstrukturierte bzw. ungeschäumte Bulkpolymer und damit eine absolute Volumenschäumung von mindestens bzw. $\geq$ 1% auf.

Der erfindungsgemäße Polymerschaum eignet sich als Oberflächenbeschichtung für Substrate und verleiht diesen superabweisende Eigenschaften. Da die Effekttiefe, d.h. die Tiefe, innerhalb derer die Nanostrukturierung vorliegt, gleich der Gesamtdicke der Beschichtung ist, handelt es sich nicht um einen Oberflächen- sondern um einen Volumeneffekt, wie Fig. 1 zu entnehmen ist. Erst wenn die gesamte Beschichtung vollständig entfernt ist, verliert das Substrat seinen superabweisenden Effekt. Eine geringfügige Abrasion des Polymerschaumes regeneriert den superabweisenden Effekt sogar, da eine neue Schicht mit entsprechender Oberflächenrauigkeit freigelegt wird.

Erfindungsgemäß weist der hochfluorierte nanostrukturierte Polymerschaum eine freie Oberflächenenergie von höchstens bzw. $\leq$ 5 mN/m auf. Durch die Hohlraumstruktur und die dadurch bedingte Oberflächenrauigkeit wird die effektive Kontaktfläche soweit reduziert, dass der erfindungsgemäße Polymerschaum bereits bei freien Oberflächenenergien von 5 mN/m superabweisend ist. Mit dem erfindungsgemäßen Polymerschaum beschichtete Substrate sind demnach sowohl gegenüber Wasser als auch gegenüber Ölen und organischen Lösungsmitteln abweisend. Die freien Oberflächenenergien werden erfindungsgemäß unter Verwendung der OWRK-Methode in Übereinstimmung mit DIN55660-2 mittels eines kommerziellen Kontaktwinkelmessgeräts (Typ: OCA-15, Data Physics) gemessen. Als Flüssigkeiten werden Wasser und Diiodmethan verwendet.

Erreicht wird die niedrige freie Oberflächenenergie des erfindungsgemäßen Polymerschaumes durch einen Fluorgehalt von mindestens 40 mol%, bezogen auf die chemische Zusammensetzung des Polymerschaumes. Die restlichen Stoffmengenanteile hiervon entfallen insbesondere auf Kohlenstoff, Wasserstoff und gegebenenfalls Sauerstoff, wobei die chemische Zusammensetzung des Polymerschaumes nicht auf jene Elemente beschränkt ist.

Typischerweise liegen mindestens bzw. $\geq$ 20%, bevorzugt mindestens bzw. $\geq$ 30% und besonders bevorzugt mindestens bzw. $\geq$ 40% der im erfindungsgemäßen Polymerschaum enthaltenen Fluoratome in $CF_3$-Gruppen vor, da diese im Vergleich zu $CF_2$-Gruppen und CF-Gruppen niedrigere freie Oberflächenenergien ermöglichen. Der restliche Fluorgehalt liegt vorzugsweise in $CF_2$-Gruppen vor.

Weiterhin ist zum Erreichen der superabweisenden Eigenschaft eine poröse Struktur des Polymerschaumes notwendig, welche die Oberflächenrauigkeit gewährleistet, um ausreichend Luft an der Oberfläche zu halten. Hierdurch wird sichergestellt, dass das Dreiphasensystem entsprechend der Youngschen Gleichung erfüllt ist, wodurch in Verbindung mit der niedrigen freien Oberflächenenergie Kontaktwinkel für Wasser sowie für Öle und organische Lösungsmittel von $\theta > 90°$ erhalten werden. Erfindungsgemäß ist die poröse Struktur des Polymerschaumes dadurch gekennzeichnet, dass Hohlräume mit Abmessungen von höchstens bzw. $\leq$ 5 $\mu$m, bevorzugt von höchstens bzw. $\leq$ 500 nm und besonders bevorzugt von höchstens bzw. $\leq$ 50 nm im gesamten Volumen des Polymerschaumes homogen verteilt sind.

Im Rahmen der vorliegenden Erfindung ist der Begriff "nanostrukturiert" so aufzufassen, dass die Hohlräume des erfindungsgemäßen Polymerschaumes nicht notwendigerweise Abmessungen ausschließlich im Nanometerbereich aufweisen, wenngleich solch nanoskalige Abmessungen bevorzugt sind.

Der erfindungsgemäße Polymerschaum ist demnach hochfluoriert und nanostrukturiert, wobei jene Eigenschaften nicht auf die Oberfläche des Polymerschaumes beschränkt sind. Es handelt sich folglich um einen Volumeneffekt.

Aufgrund der im gesamten Volumen des erfindungsgemäßen Polymerschaumes homogen verteilten Hohlräume beträgt die Dichte des Polymerschaumes höchstens bzw. $\leq$ 2,2 g/mL, bevorzugt höchstens bzw. $\leq$ 1,8 g/mL und besonders bevorzugt höchstens bzw. $\leq$ 1,5 g/mL. Der hochfluorierte nanostrukturierte Polymerschaum weist dabei eine um mindestens bzw. $\geq$ 1%, bevorzugt mindestens bzw. $\geq$ 10% und besonders bevorzugt mindestens bzw. $\geq$ 20% geringere Dichte auf als das unstrukturierte bzw. ungeschäumte Bulkpolymer, welches frei von Hohlräumen ist. Folglich weist der erfindungsgemäße Polymerschaum eine absolute Volumenschäumung von mindestens bzw. $\geq$ 1%, bevorzugt von mindestens bzw. $\geq$ 10% und besonders bevorzugt von mindestens bzw. $\geq$ 20% auf. Der Dichteunterschied bzw. die absolute Volumenschäumung lassen sich als ein Maß für die Porosität des erfindungsgemäßen Polymerschaumes verstehen.

Die Dichte des Polymerschaumes wird erfindungsgemäß an Normkörpern mit einem Durchmesser von 1 cm und einer Dicke von 3 mm vermessen. Dabei wird das Gewicht des Polymerschaumes mittels einer Feinwaage bestimmt.

Da der erfindungsgemäße Polymerschaum Hohlräume aufweisen kann, deren Abmessungen kleiner sind als die Wellenlänge des sichtbaren Spektrums, erscheint der Polymerschaum gegebenenfalls optisch transparent. In einer

Ausführungsform der vorliegenden Erfindung weist der Polymerschaum eine Transmission von mindestens bzw. ≥ 50% im Wellenlängenbereich von 400 bis 800 nm bei einer Schichtdicke von 0,25 mm auf, bevorzugt von mindestens bzw. ≥ 70% und besonders bevorzugt von mindestens bzw. ≥ 90%. Die Messung der Transmission erfolgt hier mit einem UV/VIS-Spektrometer des Typs Evolution 201 (Thermo Scientific, Deutschland) an Proben mit 0,25 mm Schichtdicke.

Zur

Herstellung des erfindungsgemäßen hochfluorierten nanostrukturierten Polymerschaumes wird eine Zusammensetzung verwendet, umfassend die nachstehenden Komponenten:

mindestens ein Monomer, welches durch Zufuhr von Wärme oder Licht polymerisiert werden kann, wobei der Fluorgehalt des mindestens einen Monomers mindestens 40 mol% beträgt;
einen Polymerisationsstarter, der durch Zufuhr von Wärme oder Licht die Polymerisation des mindestens einen Monomers initiiert; und einen nicht-polymerisierbaren Porenbildner.

Mit der erfindungsgemäßen Zusammensetzung lässt sich der vorstehend beschriebene erfindungsgemäße hochfluorierte nanostrukturierte Polymerschaum herstellen. Das mindestens eine Monomer der erfindungsgemäßen Zusammensetzung liegt bei Raumtemperatur, d.h. bei einer Temperatur von 20 °C in flüssiger Form vor. In diesem Zusammenhang bedeutet das Vorliegen in flüssiger Form, dass das mindestens eine Monomer entweder einen flüssigen Aggregatszustand aufweist oder in einem flüssigen Porogen gelöst ist. Beispiele für ein solches Porogen sind langkettige gesättigte und ungesättigte nicht-, teil- oder perfluorierte Alkane und Carbonsäuren.

Der Fluorgehalt des mindestens einen Monomers beträgt mindestens 40 mol%, bezogen auf die atomare Zusammensetzung des mindestens einen Monomers. Eine Obergrenze des Fluorgehalts ist nur durch die maximale Fluorierbarkeit gegeben und ist daher lediglich technisch bedingt. Prinzipiell ist eine möglichst hohe Fluorierung bevorzugt.

Typischerweise liegen mindestens bzw. ≥ 20%, bevorzugt mindestens bzw. ≥ 30% und besonders bevorzugt mindestens bzw. ≥ 40% der Fluoratome des mindestens einen Monomers in $CF_3$-Gruppen vor, da diese im Vergleich zu $CF_2$-Gruppen und CF-Gruppen niedrigere freie Oberflächenenergien ermöglichen. Der restliche Fluorgehalt liegt vorzugsweise in $CF_2$-Gruppen vor.

Das mindestens eine Monomer lässt sich durch Zufuhr von Wärme oder Licht bei Anwesenheit eines Polymerisationsstarters polymerisieren. Dementsprechend weist das mindestens eine Monomer erfindungsgemäß eine oder mehrere für eine Polymerisation geeignete funktionelle Gruppe(n) auf, wie etwa mindestens eine Doppelbindung oder mindestens zwei funktionelle Gruppen wie etwa Hydroxyl bzw. Carboxyl, welche beispielsweise die Bildung von Polyestern erlauben. Nicht einschränkend sind als weitere funktionelle Gruppen Epoxid, Isocyanat, Isothiocyanat, Amino, Thiol oder vergleichbare, dem Fachmann bekannte funktionelle Gruppen genannt.

Bei Anwesenheit mehrerer polymerisierbarer funktioneller Gruppen kann der nach der Polymerisation erhaltene Polymerschaum chemisch vernetzt sein, wodurch dessen mechanische Stabilität erhöht ist. Dies stellt ein Vorteil gegenüber den vergleichsweise weichen Thermoplasten, welche im Stand der Technik beschrieben sind, dar. Letztere weisen keine chemische Vernetzung auf. In einer Ausführungsform der vorliegenden Erfindung umfasst die erfindungsgemäße Zusammensetzung mindestens ein Monomer, welches mindestens zwei Doppelbindungen aufweist, wodurch eine chemische Vernetzung möglich ist.

Die chemische Struktur des mindestens einen Monomers unterliegt ansonsten keinen weiteren Einschränkungen. So kann das mindestens eine Monomer beispielsweise zusätzliche nicht-polymerisierbare funktionelle Gruppen wie Carbonyl-, Ether- und/oder Estergruppen aufweisen. Neben Fluor umfasst das mindestens eine Monomer daher noch Kohlenstoff, Wasserstoff und gegebenenfalls Sauerstoff, ist aber nicht auf jene Elemente beschränkt.

In einer Ausführungsform der vorliegenden Erfindung umfasst die Zusammensetzung ein Diacrylatderivat als mindestens ein Monomer, dargestellt durch die nachstehende allgemeine Formel (I):

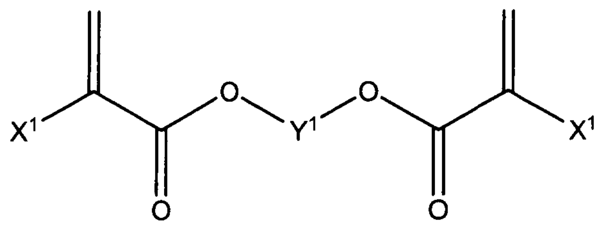

(I)

wobei $X^1$ unabhängig aus der Gruppe, bestehend aus Wasserstoff, Methyl, Monofluormethyl, Difluormethyl und Trifluormethyl, ausgewählt ist und $Y^1$ einen fluorierten gesättigten Kohlenwasserstoffrest darstellt, der gegebenenfalls eine oder mehrere Ethergruppen aufweist. Das Molekulargewicht des vorstehend definierten Diacrylatderivats unterliegt

keinen besonderen Einschränkungen.

In einer weiteren Ausführungsform der vorliegenden Erfindung umfasst die Zusammensetzung ein Monoacrylatderivat als mindestens ein Monomer, dargestellt durch die nachstehende allgemeine Formel (II):

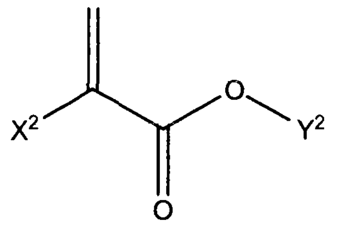

(II)

wobei $X^2$ aus der Gruppe, bestehend aus Wasserstoff, Methyl, Monofluormethyl, Difluormethyl und Trifluormethyl, ausgewählt ist und $Y^2$ einen fluorierten gesättigten Kohlenwasserstoffrest darstellt, der gegebenenfalls eine oder mehrere Ethergruppen aufweist. Das Molekulargewicht des vorstehend definierten Monoacrylatderivats unterliegt keinen besonderen Einschränkungen.

Während das vorstehend definierte Diacrylatderivat eine chemische Vernetzung des Polymerschaumes zulässt, ist dies bei dem vorstehend definierten Monoacrylatderivat naturgemäß nicht der Fall. Liegen in der erfindungsgemäßen Zusammensetzung beide Acrylatderivate vor, kann durch Wahl der Stoffmengenanteile hiervon der Vernetzungsgrad eingestellt werden. Auf diese Weise lassen sich die mechanischen und thermischen Eigenschaften des erfindungsgemäßen hochfluorierten nanostrukturierten Polymerschaumes kontrollieren.

Die Anzahl der chemisch verschiedenen Monomere in der erfindungsgemäßen Zusammensetzung zur Herstellung eines hochfluorierten nanostrukturierten Polymerschaumes ist in keinster Weise eingeschränkt.

Neben dem mindestens einen Monomer umfasst die erfindungsgemäße Zusammensetzung zur Herstellung eines hochfluorierten nanostrukturierten Polymerschaumes einen Polymerisationsstarter, der durch Zufuhr von Wärme oder Licht die Polymerisation des mindestens einen Monomers initiiert. Der Polymerisationsstarter ist erfindungsgemäß keinen Einschränkungen unterworfen. Die vorstehend definierte Zusammensetzung kann einen beliebigen im Stand der Technik bekannten Polymerisationsstarter umfassen, sofern er durch thermolytische oder photolytische Spaltung polymerisationsinduzierende Verbindungen erzeugen kann. Beispiele für Polymerisationsstarter in Form von Radikalinitiatoren, die sich mittels Licht aktivieren lassen, sind Azobis(isobutyronitril) und Benzoylperoxid, während beispielsweise 2,2-Dimethoxy-2-phenylacetophenon, Phenylbis(2,4,6-trimethylbenzoyl)phosphinoxid, 2-Hydroxy-4'-(2-hydroxyethoxy)-2-methylpropiophenon und 2-Hydroxy-2-methylpropio-phenon thermisch aktivierbare Radikalinitiatoren darstellen. Da sich die Zufuhr von Licht räumlich genauer begrenzen lässt als die Zufuhr von Wärme, umfasst die erfindungsgemäße Zusammensetzung vorzugsweise einen mittels Licht aktivierbaren Radikalstarter, sofern eine ortsaufgelöste Polymerisation des mindestens einen Monomers und damit eine ortsaufgelöste Substratbeschichtung erforderlich ist.

Weiterhin umfasst die erfindungsgemäße Zusammensetzung einen nicht-polymerisierbaren Porenbildner, welcher demnach nicht an der Polymerisation des mindestens einen Monomers teilnimmt. Der Porenbildner ist mit dem mindestens einen Monomer mischbar. Er liegt jedoch im ausgehärteten Polymerschaum als separate Phase vor. Der Porenbildner kann dabei aus einem einzigen Stoff oder aus einer geeigneten Mischung von Stoffen bestehen. Bei Vorliegen eines bestimmten Grenzmolekulargewichts führt der nicht-polymerisierbare Porenbildner eine Phasenseparation durch und stört damit strukturell den Polymerisationsprozess, weswegen auch der Begriff Phasenbildner geläufig ist. Der Porenbildner trennt sich während der Polymerisation innerhalb der Polymermatrix ab und bildet so die späteren Hohlräume des Polymerschaumes, d.h. der nicht-polymerisierbare Porenbildner ist für dessen Nanostrukturierung verantwortlich. Ist die Polymerisation abgeschlossen, verdampft der Porenbildner im Laufe der Zeit, beispielsweise durch einen geeigneten Trocknungsprozess, und lässt so die für die poröse Struktur notwendigen Hohlräume im Polymerschaum zurück. Da die Polymerisation einen Bulkprozess darstellt, erfolgt die Phasenseparation ebenfalls im Bulk, wodurch die Hohlraumstruktur homogen über das gesamte Volumen des Polymerschaumes verteilt ist, d.h. Letzterer ist gleichmäßig porös. Folglich liegen auch an der Oberfläche des Polymerschaumes entsprechende Hohlräume, wie in Fig. 1 dargestellt, vor, wodurch der Polymerschaum die für den superabweisenden Effekt erforderliche Oberflächenrauigkeit aufweist. Aufgrund der Hohlraumstruktur entlang der gesamten Schichtdicke des Polymerschaumes wird die Oberflächenrauigkeit bei einem Materialabtrag wie etwa durch Abrasion stetig erneuert.

Die Menge des nicht-polymerisierbaren Porenbildners in der erfindungsgemäßen Zusammensetzung definiert die Struktur, d.h. die Porosität des Polymerschaumes. Fig. 2 zeigt Beispiele von Polymerschäumen mit unterschiedlichen Anteilen an Porenbildnern. In einer Ausführungsform der vorliegenden Erfindung beträgt der Volumenanteil des nicht-polymerisierbaren Porenbildners an der Zusammensetzung mindestens bzw. ≥ 5%, bevorzugt mindestens bzw. ≥ 10% und besonders bevorzugt mindestens bzw. ≥ 20%. Die Porosität des Polymerschaumes lässt sich auf diese Weise gezielt einstellen.

Da der nicht-polymerisierbare Porenbildner nach Abschluss der Polymerisation beispielsweise sukzessiv durch Verdampfen in einem geeigneten Trocknungsprozess entfernt werden soll, um so die durch ihn hervorgerufenen Hohlräume mit Luft zu füllen, sind als Porenbildner solche Stoffe zu wählen, die einen ausreichend hohen Dampfdruck aufweisen. Hierdurch wird sichergestellt, dass kein aufwendiges Entfernen des Porenbildners in einem separaten Verfahrensschritt notwendig ist. Als Porenbildner kommen hier beispielsweise Gase in Frage wie etwa Stickstoff, Sauerstoff oder Kohlenstoffdioxid, aber auch Edelgase wie etwa Argon, sowie weitere Gase, die nicht mit der Polymermatrix und den Komponenten der Zusammensetzung reagieren. Auch können als Porenbildner gesättigte Alkohole, wie etwa Ethanol oder Isopropanol, verwendet werden, die gegebenenfalls zyklisch sind, wie etwa Cyclohexanol. Ferner können Ketone, wie etwa Aceton, als Porenbildner Verwendung finden, ebenso aliphatische und aromatische Ether, beispielsweise Diethylether. Ebenfalls kommen Ester, aromatische und aliphatische Kohlenwasserstoffe, aber auch Wasser als Porenbildner in Frage. Der nicht-polymerisierbare Porenbildner ist erfindungsgemäß allerdings nicht auf die vorstehend genannten Stoffe beschränkt. Auch kann die erfindungsgemäße Zusammensetzung mehr als einen nicht-polymerisierbaren Porenbildner umfassen.

Zur Herstellung des erfindungsgemäßen hochfluorierten nanostrukturierten Polymerschaumes wird ein Verfahren verwendet, umfassend die nachstehenden Schritte:

(a) Aushärten der vorstehend definierten Zusammensetzung, gegebenenfalls auf einem zu beschichtenden Substrat, durch Zufuhr von Wärme oder Licht;
(b) gegebenenfalls Eintauchen des so erhaltenen Polymerschaumes in ein Lösungsmittel; und
(c) Trocknen des so behandelten Polymerschaumes,
wobei die Schritte (a) bis (c) gegebenenfalls mindestens einmal wiederholt werden.

Mit dem erfindungsgemäßen Verfahren lässt sich unter Verwendung der erfindungsgemäßen Zusammensetzung der vorstehend beschriebene erfindungsgemäße Polymerschaum, gegebenenfalls auf einem zu beschichtenden Substrat, herstellen.

In Schritt (a) des erfindungsgemäßen Verfahrens wird die Zusammensetzung, umfassend mindestens ein Monomer, einen Polymerisationsstarter und einen nicht-polymerisierbaren Porenbildner, ausgehärtet, wodurch ein hochfluorierter nanostrukturierter Polymerschaum erhalten wird. Zu diesem Zweck wird die erfindungsgemäße Zusammensetzung gegebenenfalls auf einem zu beschichtenden Substrat vorgelegt bzw. aufgebracht bzw. angeordnet. Das Substrat unterliegt erfindungsgemäß keinen Einschränkungen und kann daher jedes beliebige Substrat sein, für das eine superabweisende Beschichtung in Frage kommt.

Je nach Wahl des Polymerisationsstarters erfolgt das Aushärten der Zusammensetzung, d.h. das Auspolymerisieren des mindestens einen Monomers, durch Zufuhr von Wärme oder Licht. Die zur thermolytischen bzw. photolytischen Spaltung notwendige Temperatur bzw. Wellenlänge hängt naturgemäß vom jeweiligen Polymerisationsstarter ab und kann dem Stand der Technik entnommen werden.

Das Aushärten der Zusammensetzung in Schritt (a) des erfindungsgemäßen Verfahrens erfolgt typischerweise für eine Dauer von höchstens bzw. $\leq$ 20 Minuten, bevorzugt von höchstens bzw. $\leq$ 10 Minuten und besonders bevorzugt von höchstens bzw. $\leq$ 1 Minute. Die Dauer des Aushärtens in Schritt (a) hat keinen Einfluss auf die Dicke des entstehenden Polymerschaumes. Diese hängt letztlich nur von der bereitgestellten Menge der Zusammensetzung ab. Allerdings bedürfen größere Mengen hiervon prinzipiell einer längeren Aushärtungsdauer. Als bevorzugte Untergrenze für die Dauer des Aushärtens in Schritt (a) sind hier 5 Sekunden genannt.

Soll die superabweisende Beschichtung nur an bestimmten Stellen eines zu beschichtenden Substrates aufgebracht werden, erfolgt das Aushärten der Zusammensetzung in Schritt (a) vorzugsweise durch Zufuhr von Licht, da hierbei mit einer höheren Ortsauflösung räumlich aufgelöst ausgehärtet werden kann. Je nach Art des Aushärtens, ob durch Zufuhr von Licht oder durch Zufuhr von Wärme, wird der Fachmann einen geeigneten Polymerisationsstarter für die erfindungsgemäße Zusammensetzung auswählen.

In Schritt (b) des erfindungsgemäßen Verfahrens wird der in Schritt (a) erhaltene Polymerschaum gegebenenfalls in ein Lösungsmittel eingetaucht, typischerweise für eine Dauer im Bereich von 15 Sekunden bis 24 Stunden. Das Eintauchen dient der Beschleunigung des anschließenden Trocknungsprozesses in Schritt (c), da hierdurch nicht-polymerisierte Monomerrückstände und der Porenbildner bereits in Lösung gebracht und grob entfernt werden können. Als Lösungsmittel kann hierbei jedes Lösungsmittel verwendet werden, in dem sich das Monomer und/oder der Porenbildner lösen lassen. Beispielsweise kann ein Alkohol verwendet werden, wie etwa Isopropanol, oder ein Keton, wie etwa Aceton. Möglich ist auch die Verwendung des nicht-polymerisierbaren Porenbildners selbst, sofern es sich bei diesem um eine Flüssigkeit handelt.

Anschließend wird in Schritt (c) des erfindungsgemäßen Verfahrens der gegebenenfalls in Schritt (b) behandelte Polymerschaum getrocknet, woraufhin der nicht-polymerisierbare Porenbildner aus den Hohlräumen des Polymerschaumes entfernt wird und jene Hohlräume schließlich mit Luft gefüllt werden. Weist der verwendete, d.h. in der erfindungsgemäßen Zusammensetzung enthaltene nicht-polymerisierbare Porenbildner einen ausreichenden Dampfdruck auf und

ist er ferner gesundheitlich und umweltschutztechnisch unbedenklich, kann das Trocknen in Schritt (c) bei Umgebungsluft, -temperatur und -druck erfolgen. Dies gilt insbesondere dann, wenn inerte Gase oder Alkohole, wie etwa Ethanol oder Isopropanol, als Porenbildner eingesetzt werden.

In einer Ausführungsform des erfindungsgemäßen Verfahrens erfolgt das Trocknen in Schritt (c) bei einer Temperatur im Bereich von 50 bis 100 °C, bevorzugt bei einer Temperatur im Bereich von 60 bis 90 °C und besonders bevorzugt bei einer Temperatur im Bereich von 70 bis 80 °C, vorzugsweise in einem Vakuumofen. In einer anderen Ausführungsform des erfindungsgemäßen Verfahrens erfolgt das Trocknen durch Anlegen eines Unterdrucks bei Umgebungstemperatur. Der Druck kann dabei im Bereich von 10 bis 900 mbar liegen. Durch Anlegen eines Unterdrucks bzw. Vakuums während des Trocknens in Schritt (c) lässt sich so der Verdampfungsvorgang des nicht-polymerisierbaren Porenbildners beschleunigen. Die Trocknungsdauer beträgt in Schritt (c) typischerweise von 15 Sekunden bis 120 Minuten, wobei sie entsprechend der Menge der ursprünglich eingesetzten Zusammensetzung variieren kann.

Für den Trocknungsprozess in Schritt (c) bedarf es grundsätzlich keiner Offenporigkeit, d.h. die im erfindungsgemäßen Polymerschaum vorhandenen Hohlräume können auch in Form von geschlossenen Poren vorliegen. So kann bei erhöhter Temperatur der in den Hohlräumen eingeschlossene nicht-polymerisierbare Porenbildner an die Oberfläche des Polymerschaums transportiert werden, was durch Anlegen eines Unterdrucks bzw. Vakuums weiter begünstigt wird.

Die Schritte (a) bis (c) des erfindungsgemäßen Verfahrens zur Herstellung eines hochfluorierten nanostrukturierten Polymerschaumes werden gegebenenfalls mindestens einmal wiederholt. Dabei wird ein in der Iteration n erzeugter Polymerschaum als zu beschichtendes Substrat für die Iteration n+1 verwendet und mittels des erfindungsgemäßen Verfahrens erneut beschichtet.

Mit dem erfindungsgemäßen Verfahren ist es möglich den hochfluorierten nanostrukturierten Polymerschaum *in situ* auf ein zu beschichtendes Substrat aufzubringen, um diesem superabweisende Oberflächeneigenschaften zu verleihen. Alternativ kann ein zu beschichtendes Substrat zu diesem Zweck auch mit dem fertigen, d.h. ausgehärteten und getrockneten Polymerschaum versehen werden. Hierzu wird beispielsweise mittels eines geeigneten Klebeverfahrens eine ausgehärtete und getrocknete Polymerschaumschicht auf das zu beschichtende Substrat aufgebracht. Dabei muss ein für Fluorpolymere geeigneter Kleber ausgewählt werden, beispielsweise das in der verwendeten Zusammensetzung enthaltene mindestens eine Monomer, welches als Reaktivkleber fungiert.

In einem weiteren Aspekt betrifft die vorliegende Erfindung die Verwendung des erfindungsgemäßen hochfluorierten nanostrukturierten Polymerschaumes als superabweisende Beschichtung von Substraten sowie die Verwendung der erfindungsgemäßen Zusammensetzung zur Bereitstellung einer superabweisenden Beschichtung von Substraten. Wie vorstehend erwähnt, unterliegt das Substrat erfindungsgemäß keinen Einschränkungen und kann daher jedes beliebige Substrat sein, für das eine superabweisende Beschichtung in Frage kommt. Nicht einschränkend sind hier beispielsweise als Substrate Gewebe und Textilien jedweder Art, Gläser, Keramiken und Metalle genannt. Als Anwendungen sind hier beispielsweise die Herstellung schmutzabweisender Gewebe und Textilien, die Beschichtung von Brillengläsern, nicht-zufrierende Schutzscheiben für die Automobilindustrie, nicht-korrodierende Metalle in technischen Leitungssystemen, die Herabsetzung von Rohreibungsbeiwerten, etc. genannt.

Die vorliegende Erfindung erlaubt die Bereitstellung superabweisender Beschichtungen von Substraten auf Basis eines Polymerschaumes, der zum einen intrinsisch porös und zum anderen intrinsisch hochfluoriert bzw. niederenergetisch ist, wodurch die superabweisende Eigenschaft innerhalb des gesamten Schichtvolumens bzw. über die gesamte Dicke der Beschichtung gewährleistet ist. Im Vergleich zu den eingangs erwähnten "Top-Down-Ansätzen" bzw. "Bottom-Up-Ansätzen", die entweder für die eine oder für die andere Eigenschaft eines zweiten Verfahrensschrittes bedürfen, ist das erfindungsgemäße Verfahren weder apparativ aufwendig noch auf eine bestimmte Effekttiefe begrenzt. Wie bereits erwähnt, wird unter der Effekttiefe die Substratdicke verstanden, auf welcher der superabweisende Effekt wirkt. Die Effekttiefe ist erfindungsgemäß gleich der effektiven Gesamtdicke der Polymerschaumbeschichtung. Somit handelt es sich nicht um einen Oberflächen- sondern um einen Volumeneffekt. Erst wenn die gesamte Beschichtung vollständig entfernt ist, geht der superabweisende Effekt verloren. Eine leichte Abrasion der Oberfläche regeneriert den Effekt eher, als dass er zerstört wird. Aufgrund dieser Selbstregenerierung bedarf der erfindungsgemäße Polymerschaum keiner aufwendigen Behandlung im Falle einer Abrasion, wie etwa einer Einlagerung von Fluorierungsreagenzien in tiefere Oberflächenschichten, beschrieben von Jin et al. (Applied Materials & Interfaces 2013, 5, 485-488).

Der erfindungsgemäße Polymerschaum ist in Fig. 3 dem "Top-Down-Ansatz" sowie dem "Bottom-Up-Ansatz" gegenübergestellt. Im Wesentlich haben beide letztgenannten Verfahren zum Nachteil, dass sie Effekttiefen von wenigen 10 bis 100 μm in sehr abrasionsempfindlichen Substraten erzeugen. Ist der superabweisende Effekt auf der prozessierten Oberfläche zunächst stark ausgeprägt, so kann dieser Effekt durch einfache Abrasion, beispielsweise durch Kratzen mit dem Fingernagel, zerstört werden. Der Grund hierfür liegt darin, dass durch Abrasion eine Schicht in der Dicke der Effekttiefe abgetragen wird, wodurch die darunterliegende Schicht zutage tritt. Diese Schicht weist im Allgemeinen höchstens eine der beiden für die Herstellung superabweisender Oberflächen notwendigen Eigenschaften auf: entweder die Rauigkeit durch Mikro- bzw. Nanostrukturierung oder die niedrige freie Oberflächenenergie durch einen hohen Fluorierungsgrad. Da der erfindungsgemäße Polymerschaum inhärent beide Eigenschaften - hoher Fluorierungsgrad sowie Nanostrukturierung durch das gesamte Volumen - aufweist, kann eine mechanische Abrasion den Effekt nicht

zerstören. Durch Materialabtrag wird eine unter der Oberfläche liegende Schicht freigelegt, die genau die gleichen Eigenschaften aufweist wie die abgetragene Oberflächenschicht. Der superabweisende Effekt geht somit nicht verloren, er ist daher abrasionsresistent.

Weiterhin weist die vorliegende Erfindung gegenüber dem Stand der Technik folgende Vorteile auf:
Es ist kein selektives Ätzen notwendig. Dies ist ein Vorteil vor allem gegenüber all jenen Verfahren, die zunächst ein Substrat herstellen, das aus zwei Materialien besteht, die eine geeignete Phasenseparation erzeugen. Dann wird in einem nächsten Schritt eines der beiden Materialien selektiv entfernt. Nachteilig hieran ist vor allem, dass das selektive Entfernen nach der Beschichtung erfolgen und somit das zu beschichtende Substrat beispielsweise in einem Tauchbad behandelt werden muss. Das erfindungsgemäße Verfahren weist diesen Nachteil nicht auf.

Es ist ferner keine Handhabung von Nanopartikeln notwendig. Dies ist vor allem unter dem Gesichtspunkt der Betriebssicherheit vorteilhaft. Nanopartikel müssen mithin in geeigneter Umgebung und unter Verwendung geeigneter Atemschutzvorrichtungen verarbeitet werden. Werden fluorierte Nanopartikel verwendet, ist eine zusätzliche Gefährdung durch die Fluorierung gegeben. Nanopartikel sind lungengängig und es ist anzunehmen, dass fluorierte Nanopartikel eine erhebliche gesundheitliche Belastung darstellen. Das erfindungsgemäße Verfahren kommt ohne die Handhabung von Nanopartikeln aus und ist somit in der Anwendung bzw. im Betrieb sicherer.

Im Vergleich zu Verfahren, bei denen eine nanostrukturierte Oberfläche in einem ersten Schritt mittels eines Abscheidungsprozesses auf die Oberfläche aufgebracht und in einem zweiten Schritt fluoriert wird (alternativ ist auch die Abscheidung fluorierter nanostrukturierter Partikel, Fäden, etc. möglich) erzeugt das erfindungsgemäße Verfahren Beschichtungen mit signifikant erhöhter mechanischer Stabilität. Dies ist in der Tatsache begründet, dass sich die Effekttiefe im erfindungsgemäßen Verfahren auf die gesamte Beschichtungsdicke erstreckt und nicht nur auf die Eindringtiefe der Fluorierung beschränkt ist. Darüber hinaus erzeugt ein chemisch vernetztes Polymer gemäß einer Ausführungsform der vorliegenden Erfindung eine mechanisch signifikant stabilere Schicht, als es der lose Verbund von Nanostrukturen in Form von Schüttungen oder Ähnlichem erreichen kann.

Das erfindungsgemäße Verfahren erlaubt grundsätzlich die freie Einstellung der Porosität, wodurch Beschichtungen hergestellt werden können, die von hydrophil/oleophil über hydrophob/oleophil zu superhydrophob/superoleophob reichen.

Durch die freie Einstellbarkeit der Porosität ist es möglich, Substratbeschichtungen herzustellen, deren Porosität so fein ist, dass die Beschichtung optisch transparent wird. Dies ist ein entscheidender Vorteil gegenüber all jenen im Stand der Technik bekannten Verfahren, die lediglich weißliche oder opake Beschichtungen bereitstellen.

Im Vergleich zu vielen im Stand der Technik bekannten Verfahren bedarf das erfindungsgemäße Verfahren lediglich eines geringen apparativen Aufwands, wodurch Letzteres nicht auf den Einsatz im Labor beschränkt bleibt, sondern sich auch für eine großtechnische Anwendung eignet. Dies ist ein entscheidender Vorteil gegenüber vielen anderen Verfahren, die sich lediglich in kontrollierter Laborumgebung durchführen lassen. Insbesondere ist keine aufwendige thermische Nachbehandlung erforderlich, vor allem kein Hochtemperaturprozess, wie dies beispielsweise bei der Kalzinierung der Fall ist. Somit eignet sich das erfindungsgemäße Verfahren ferner auch für die Beschichtung von Substraten, die thermisch empfindlich sind, wie etwa Gewebe und Textilien.

Die erfindungsgemäße Zusammensetzung umfasst vorteilhafterweise keine eingemischten Feststoffe. Hierdurch sind Formulierungen möglich, die sich nicht absetzen bzw. nach langer Lagerung trennen.

Im Gegensatz zu vielen im Stand der Technik beschriebenen Ansätzen erlaubt das erfindungsgemäße Verfahren die superabweisende Beschichtung einer nahezu beliebig dimensionierten Fläche, da die Polymerisation sehr schnell und großflächig durchgeführt werden kann.

Aufgrund der frei einstellbaren chemischen Vernetzung des *in situ* hergestellten erfindungsgemäßen Polymerschaumes ist dessen chemische und mechanische Beständigkeit signifikant höher als bei hochfluorierten Thermoplasten, die bedingt durch die fehlende Vernetzung sehr weich sind und damit zu einem erhöhten Materialabtrag durch Abrasion neigen.

Die Figuren zeigen:

Fig. 1 zeigt die Struktur des erfindungsgemäßen Polymerschaumes. Eine fluorierte polymere Matrix (10) ist durchdrungen von einem Hohlraumnetzwerk, das mit Luft (11) gefüllt ist. Es entsteht ein "fluorierter Schwamm", der an seiner Oberfläche eine hohe Rauigkeit aufweist.

Fig. 2 zeigt Beispiele eines ausgehärteten Polymerschaumes bei An- und Abwesenheit eines nicht-polymerisierbaren Porenbildners. (a) Mikrofluidische Kanalstruktur und (b) kompakter Polymerblock (beide nicht erfindungsgemäß). Hier weist der Polymerschaum keine Porosität auf. Unter Verwendung von nicht-polymerisierbaren Porenbildnern kann ein Polymerschaum in Form von globularen Strukturen (c) oder in Form von Substraten mit mikro- bzw. nanoskaliger Rauigkeit (d) hergestellt werden. Fig. 3 zeigt die "Top-Down-Strukturierung" und "Bottom-Up-Strukturierung" im Vergleich zum erfindungsgemäßen Polymerschaum. (a) Beispiel einer "Top-Down-Strukturierung". Ein hochfluoriertes Substrat (101), beispielsweise ein hochfluorierter Thermoplast, wird mit einem Formwerkzeug (102)

strukturiert. Auf dem unstrukturierten Substrat bildet eine Flüssigkeit (103) potentiell einen hohen Kontaktwinkel, es erfolgt jedoch keine Superabweisung. Nach erfolgter Strukturierung entsteht eine Schicht mit einer Effekttiefe (106) von wenigen 10 bis 100 μm, auf welcher der superabweisende Effekt (104) erreicht wird. Durch mechanische Abrasion (105) wird diese Schicht entfernt. Es liegt nun kein superabweisender Effekt mehr für die Flüssigkeit vor (107). (b) Beispiel einer "Bottom-Up-Strukturierung". Ein Substrat mit einer ausreichenden mikro- bzw. nanoskaligen Rauigkeit wird mittels eines geeigneten Prozesses fluoriert (110), wodurch die freie Oberflächenenergie der Oberfläche reduziert wird. Auf dem nativen Substrat findet keine Abweisung der Flüssigkeit statt (111). Bedingt durch Kapillareffekte kann mitunter sogar eine signifikant verbesserte Benetzung erfolgen. Nach der Herabsetzung der freien Oberflächenenergie wird die Oberfläche auf einer Effekttiefe (113) von wenigen 10 bis 100 μm superabweisend (112). Durch mechanische Abrasion kann diese Schicht leicht entfernt werden, wodurch der superabweisende Effekt verlorengeht (114). (c) erfindungsgemäßer Polymerschaum. Auf dem inhärent hochfluorierten bzw. niederenergetischen und inhärent nanoskalig strukturierten Polymerschaum (120) wird die Flüssigkeit nativ abgestoßen (121). Mechanische Abrasion (122) kann auch hier Material abtragen. Allerdings ist die Effekttiefe gleich der Gesamtdicke der Beschichtung (123). Somit wird durch Abrasion eine Schicht identischer Funktionalität freigelegt und der superabweisende Effekt bleibt erhalten (124).

Fig. 4 zeigt den erfindungsgemäßen Polymerschaum bei Kontakt mit Wasser. (a) Beim Eintauchen in Wasser wird der hohe Kontaktwinkel offensichtlich. (b) Unter Wasser hält der Polymerschaum eine spiegelnde Luftschicht an seiner Oberfläche. Diese gewährleistet das notwendige Dreiphasensystem.

Fig. 5 zeigt den superabweisenden Effekt des erfindungsgemäßen Polymerschaumes gegenüber (a) Wasser und (b) Öl (Tetradekan). Es werden Kontaktwinkel ≥ 130° erreicht.

Fig. 6 zeigt einen optisch klaren Polymerschaum gemäß der vorliegenden Erfindung, dessen Transparenz durch die Abmessungen der Hohlräume eingestellt werden kann. (a) Beschichtung mit dem erfindungsgemäßen Polymerschaum (Kante überzeichnet) auf dem KIT-Logo. (b) Optisches Transmissionsspektrum der in (a) gezeigten Probe. Die Probe erscheint durch den gesamten dargestellten Wellenlängenbereich optisch transparent.

## Beispiele

Die nachstehenden Beispiele dienen als weitere Erläuterung der vorliegenden Erfindung, ohne darauf beschränkt zu sein.

Beispiel 1

0,214 mmol eines kommerziell erhältlichen Diacrylatderivats (Fluorolink MD 700) wurden mit 0,243 mmol 1*H*,1*H*,2*H*,2*H*-Perfluoroctanol, 0,449 mmol Cyclohexanol und 0,006 mmol 2,2-Dimethoxy-2-phenylacetophenon versetzt. Die Zusammensetzung wurde unter UV-Licht (370 nm) für eine Dauer von 2 min ausgehärtet. Der so erhaltene Polymerschaum wurde für 16 Stunden in Isopropanol eingetaucht und anschließend im Ofen bei 80 °C für eine Stunde getrocknet.

Der Polymerschaum war superhydrophob, transparent mit einer leichten Trübung und wies für Dimethylsulfoxid einen Kontaktwinkel von 138° auf. Ferner wies der Polymerschaum zwischen 400 und 800 nm eine optische Transmission von 58,2% bis 91,9% bei einer Schichtdicke von 0,25 mm auf.

Die nicht-poröse Form des Polymerschaumes als Referenz wies eine freie Oberflächenenergie von 17,4 mN/m bei einer Dichte von 1,692 g/mL (+/- 0,112 g/mL, drei Messungen) auf. Die poröse Form des Polymerschaumes wies hingegen eine freie Oberflächenenergie von 2,939 mN/m bei einer Dichte von 1,660 g/mL (+/-0,030 g/mL, drei Messungen) auf. Der Polymerschaum hatte einen Fluorgehalt von 47,6 mol%, wobei 0% hiervon in $CF_3$-Gruppen und 100% hiervon in $CF_2$-Gruppen vorlagen. Der Dichteunterschied des Polymerschaumes bezogen auf das ungeschäumte Bulkpolymer betrug 1,9%. Mittels Rasterelektronenmikroskopaufnahmen wurde verifiziert, dass die Hohlräume der porösen Form des Polymerschaumes Abmessungen von weniger als 1 μm aufwiesen.

Der aus Beispiel 1 erhaltene Polymerschaum ist in Fig. 4 bis Fig. 6 dargestellt. Fig. 4 zeigt den Polymerschaum beim Eintauchen in Wasser. Zu sehen ist der hohe Kontaktwinkel gegenüber Wasser und die daraus resultierende starke Aufwölbung der Wasseroberfläche. Unter Wasser hält der Polymerschaum an seiner Oberfläche eine silbrig-reflektierend sichtbare Luftschicht. Wie bereits vorstehend erwähnt, ist jene Luftschicht erforderlich, um das für die Superabweisung notwendige Dreiphasensystem zu gewährleisten. Fig. 5 zeigt den Polymerschaum im Hinblick auf seine superabweisende Eigenschaft gegenüber Wasser und Ölen, welche auf die Kombination seiner Oberflächenrauigkeit durch Nanostrukturierung und seiner niedrigen freien Oberflächenenergie aufgrund des hohen Fluorierungsgrads zurückzuführen ist. Fig. 6 zeigt den Polymerschaum aus Beispiel 1 mit einer nanoskaligen Porosität, die so gering ist, dass das Substrat

optisch klar erscheint. Sowohl in der Aufsicht als auch in der spektroskopischen Untersuchung ist die hohe optische Transparenz ersichtlich.

Beispiel 2

Ein Monomergemisch, bestehend aus 1,520 mmol 2,2,3,3,4,4,5,5,6,6,7,7,8,8,8-Pentadecafluoroctylmethacrylat und 0,787 mmol 2,2,3,3,4,4,5,5-Octafluorhexyldimethacrylat, wurde mit 1,299 mmol Cyclohexanol, 2,049 mmol 1*H*,1*H*,2*H*,2*H*-Per-fluoroctanol, 0,086 mmol 2,2-Dimethoxy-2-phenylacetophenon und 0,681 mmol Aceton versetzt. Die Zusammensetzung wurde unter UV-Licht (220 bis 400 nm) für eine Dauer von 5 min ausgehärtet. Der so erhaltene Polymerschaum wurde für eine Stunde in Isopropanol eingetaucht und anschließend im Ofen bei 80 °C für eine Stunde getrocknet.

Der Polymerschaum war superhydrophob, optisch klar und wies für Dimethylsulfoxid einen Kontaktwinkel von 102° auf. Ferner wies der Polymerschaum zwischen 400 und 800 nm eine optische Transmission von 79,9% bis 91,4% bei einer Schichtdicke von 0,25 mm auf.

Die nicht-poröse Form des Polymerschaumes als Referenz wies eine freie Oberflächenenergie von 17,47 mN/m bei einer Dichte von 1,654 g/mL (+/- 0,058 g/mL, drei Messungen) auf. Die poröse Form des Polymerschaumes wies hingegen eine freie Oberflächenenergie von 2,140 mN/m bei einer Dichte von 1,516 g/mL (+/-0,003 g/mL, drei Messungen) auf. Der Polymerschaum hatte einen Fluorgehalt von 53,4 mol%, wobei 20% hiervon in $CF_3$-Gruppen und 80% hiervon in $CF_2$-Gruppen vorlagen. Der Dichteunterschied des Polymerschaumes bezogen auf das ungeschäumte Bulkpolymer betrug 8,3%. Mittels Rasterelektronenmikroskopaufnahmen wurde verifiziert, dass die Hohlräume der porösen Form des Polymerschaumes Abmessungen von weniger als 1 $\mu$m aufwiesen.

## Patentansprüche

1. Hochfluorierter nanostrukturierter Polymerschaum mit einer Dichte von höchstens 2,2 g/mL, wobei die Dichte an Normkörpern mit einem Durchmesser von 1 cm und einer Dicke von 3 mm vermessen wird und dabei das Gewicht mittels einer Feinwaage bestimmt wird, einer absoluten Volumenschäumung von mindestens 1%, wobei die absolute Volumenschäumung dem Dichteunterschied zwischen dem Polymerschaum und dem unstrukturierten bzw. ungeschäumten Bulkpolymer, welches frei von Hohlräumen ist, entspricht, sowie einer freien Oberflächenenergie von höchstens 5 mN/m, wobei die freie Oberflächenenergie unter Verwendung der OWRK-Methode in Übereinstimmung mit DIN55660-2 mittels eines kommerziellen Kontaktwinkelmessgeräts gemessen wird,

   wobei der Fluorgehalt, bezogen auf die chemische Zusammensetzung des Polymerschaumes, mindestens 40 mol% beträgt,
   wobei Hohlräume mit Abmessungen von höchstens 5 $\mu$m im gesamten Volumen des Polymerschaumes homogen verteilt sind und die Abmessungen der Hohlräume mittels Rasterelektronenmikroskopie evaluiert werden, und
   wobei der hochfluorierte nanostrukturierte Polymerschaum erhältlich ist durch ein Herstellungsverfahren, umfassend die nachstehenden Schritte:

   (a) Aushärten einer Zusammensetzung, gegebenenfalls auf einem zu beschichtenden Substrat, durch Zufuhr von Wärme oder Licht, wobei die Zusammensetzung umfasst:

   mindestens ein Monomer, welches durch Zufuhr von Wärme oder Licht polymerisiert werden kann, wobei der Fluorgehalt des mindestens einen Monomers mindestens 40 mol% beträgt;
   einen Polymerisationsstarter, der durch Zufuhr von Wärme oder Licht die Polymerisation des mindestens einen Monomers initiiert; und
   einen nicht-polymerisierbaren Porenbildner;

   (b) gegebenenfalls Eintauchen des so erhaltenen Polymerschaumes in ein Lösungsmittel; und
   (c) Trocknen des so behandelten Polymerschaumes,
   wobei die Schritte (a) bis (c) gegebenenfalls mindestens einmal wiederholt werden.

2. Hochfluorierter nanostrukturierter Polymerschaum nach Anspruch 1, wobei mindestens 20% des Fluorgehalts in $CF_3$-Gruppen vorliegen.

3. Hochfluorierter nanostrukturierter Polymerschaum nach Anspruch 1 oder 2, wobei der Polymerschaum eine Transmission von mindestens 50% im Wellenlängenbereich zwischen 400 und 800 nm bei einer Schichtdicke von 0,25 mm aufweist und die Messung der Transmission mit einem kommerziellen UV/VIS-Spektrometer an Proben mit 0,25 mm Schichtdicke erfolgt.

**4.** Hochfluorierter nanostrukturierter Polymerschaum nach einem der Ansprüche 1 bis 3, wobei der Volumenanteil des nicht-polymerisierbaren Porenbildners an der Zusammensetzung mindestens 5% beträgt.

**5.** Hochfluorierter nanostrukturierter Polymerschaum nach einem der Ansprüche 1 bis 4, wobei das mindestens eine Monomer ein Diacrylatderivat, dargestellt durch die nachstehende allgemeine Formel (I):

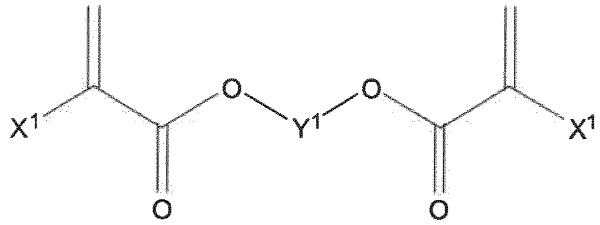

(I)

wobei $X^1$ unabhängig aus der Gruppe, bestehend aus Wasserstoff, Methyl, Monofluormethyl, Difluormethyl und Trifluormethyl, ausgewählt ist und $Y^1$ einen fluorierten gesättigten Kohlenwasserstoffrest darstellt, der gegebenenfalls eine oder mehrere Ethergruppen aufweist, oder ein Monoacrylatderivat, dargestellt durch die nachstehende allgemeine Formel (II):

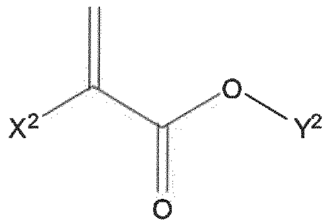

(II)

wobei $X^2$ aus der Gruppe, bestehend aus Wasserstoff, Methyl, Monofluormethyl, Difluormethyl und Trifluormethyl, ausgewählt ist und $Y^2$ einen fluorierten gesättigten Kohlenwasserstoffrest darstellt, der gegebenenfalls eine oder mehrere Ethergruppen aufweist, ist.

**6.** Hochfluorierter nanostrukturierter Polymerschaum nach einem der Ansprüche 1 bis 5, wobei der Polymerschaum in Schritt (b) in einen Alkohol eingetaucht wird.

**7.** Hochfluorierter nanostrukturierter Polymerschaum nach einem der Ansprüche 1 bis 6, wobei das Trocknen des Polymerschaumes in Schritt (c) bei einer Temperatur im Bereich von 50 bis 100 °C erfolgt.

**8.** Verwendung des hochfluorierten nanostrukturierten Polymerschaumes nach einem der Ansprüche 1 bis 7 als superabweisende Beschichtung von Substraten.

## Claims

**1.** A highly fluorinated nanostructured polymer foam with a density of at most 2.2 g/mL, wherein the density is measured on standard bodies with a diameter of 1 cm and a thickness of 3 mm and thereby the weight is determined by means of a high-precision scale, an absolute foam expansion of at least 1%, wherein the absolute foam expansion corresponds to the difference in density between the polymer foam and the unstructured or unfoamed bulk polymer which is free of cavities, as well as a free surface energy of at most 5 mN/m, wherein the free surface energy is measured using the OWRK method in accordance with DIN55660-2 by means of a commercial contact angle measurement device,

wherein the fluorine content is at least 40 mol% with reference to the chemical composition of the polymer foam,

wherein cavities with dimensions of at most 5 μm are homogeneously distributed throughout the entire volume of the polymer foam and the dimensions of the cavities are evaluated by means of scanning electron microscopy, and
wherein the highly fluorinated nanostructured polymer foam is obtainable by a production method comprising the following steps:

(a) curing a composition by supplying heat or light, optionally on a substrate to be coated, wherein the composition comprises:

at least one monomer which can be polymerized by supplying heat or light, wherein the fluorine content of the at least one monomer is at least 40 mol%;
a polymerization initiator which initiates the polymerization of the at least one monomer by supplying heat or light; and
a non-polymerizable porogen;

(b) optionally dipping the polymer foam obtained in this manner into a solvent; and
(c) drying the polymer foam treated in this manner,
wherein the steps (a) to (c) are optionally repeated at least once.

**2.** The highly fluorinated nanostructured polymer foam according to claim 1, wherein at least 20% of the fluorine content is present as $CF_3$ groups.

**3.** The highly fluorinated nanostructured polymer foam according to claim 1 or 2, wherein the polymer foam has a transmission of at least 50% within the wavelength range between 400 and 800 nm at a thickness of 0.25 mm and the measurement of the transmission is carried out by means of a commercial UV/VIS spectrometer on samples with a thickness of 0.25 mm.

**4.** The highly fluorinated nanostructured polymer foam according to any one of claims 1 to 3, wherein the volume percentage of the non-polymerizable porogen in the composition is at least 5%.

**5.** The highly fluorinated nanostructured polymer foam according to any one of claims 1 to 4, wherein the at least one monomer is a diacrylate derivative represented by the following general formula (I):

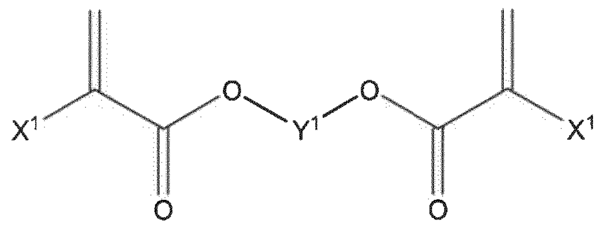
(I)

wherein $X^1$ is independently selected from the group consisting of hydrogen, methyl, monofluoromethyl, difluoromethyl and trifluoromethyl, and $Y^1$ represents a fluorinated saturated hydrocarbon residue which optionally has one or more ether groups, or a monoacrylate derivative represented by the following general formula (II):

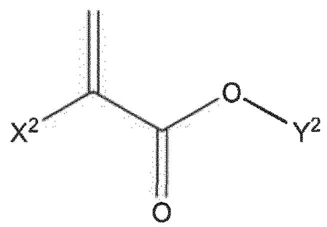
(II)

wherein $X^2$ is selected from the group consisting of hydrogen, methyl, monofluoromethyl, difluoromethyl and trifluoromethyl, and $Y^2$ represents a fluorinated saturated hydrocarbon residue which optionally has one or more ether groups.

6. The highly fluorinated nanostructured polymer foam according to any one of claims 1 to 5, wherein the polymer foam is dipped into an alcohol in step (b).

7. The highly fluorinated nanostructured polymer foam according to any one of claims 1 to 6, wherein the drying of the polymer foam in step (c) is carried out at a temperature within the range of 50 to 100°C.

8. Use of the highly fluorinated nanostructured polymer foam according to any one of claims 1 to 7 as a super-repellent coating of substrates.

## Revendications

1. Mousse polymère nanostructurée hautement fluorée avec une densité d'au plus 2,2 g/ml, dans laquelle la densité en corps normalisés avec un diamètre de 1 cm et une épaisseur de 3 mm est mesurée et le poids est ce faisant déterminé au moyen d'une balance de précision, un moussage volumique absolu d'au moins 1 %, dans laquelle le moussage volumique absolu correspond à la différence de densité entre la mousse polymère et le polymère en vrac non structuré ou non expansé qui est exempt d'espaces creux, ainsi qu'une énergie superficielle libre d'au plus 5 mN/m, dans laquelle l'énergie superficielle libre est mesurée en utilisant la méthode OWRK conformément à DIN55660-2 au moyen d'un appareil de mesure d'angle de contact commercial,

   dans laquelle la teneur en fluor, par rapport à la composition chimique de la mousse polymère, se monte à au moins 40 % en mole,
   dans laquelle des espaces creux avec des dimensions d'au plus 5 $\mu$m dans le volume total de la mousse polymère sont répartis de manière homogène et les dimensions des espaces creux sont évaluées au moyen d'une microscopie électronique à balayage, et
   dans laquelle la mousse polymère nanostructurée hautement fluorée peut être obtenue par un procédé de fabrication, comprenant les étapes suivantes :

   (a) durcissement d'une composition, éventuellement sur un substrat à enrober, par amenée de chaleur ou lumière, dans laquelle la composition comprend :

      au moins un monomère qui peut être polymérisé par l'amenée de chaleur ou lumière, dans laquelle la teneur en fluor de l'au moins un monomère se monte à au moins 40 % en mole ;
      un initiateur de polymérisation qui initie la polymérisation de l'au moins un monomère par l'amenée de chaleur ou lumière ; et
      un agent porogène non polymérisable ;

   (b) immersion éventuelle de la mousse polymère ainsi obtenue dans un solvant ; et
   (c) séchage de la mousse polymère ainsi traitée,
   dans laquelle les étapes (a) à (c) sont éventuellement répétées au moins une fois.

2. Mousse polymère nanostructurée hautement fluorée selon la revendication 1, dans laquelle au moins 20 % de la teneur en fluor sont présents dans des groupes $CF_3$.

3. Mousse polymère nanostructurée hautement fluorée selon la revendication 1 ou 2, dans laquelle la mousse polymère présente une transmission d'au moins 50 % dans la plage de longueurs d'ondes comprise entre 400 et 800 nm à une épaisseur de couche de 0,25 mm et la mesure de la transmission s'effectue avec un spectromètre UV/VIS commercial sur des échantillons avec 0,25 mm d'épaisseur de couche.

4. Mousse polymère nanostructurée hautement fluorée selon une des revendications 1 à 3, dans laquelle la proportion volumique de l'agent porogène non polymérisable par rapport à la composition se monte à au moins 5 %.

5. Mousse polymère nanostructurée hautement fluorée selon une des revendications 1 à 4, dans laquelle l'au moins un monomère est un dérivé de diacrylate, représenté par la formule générale suivante (I) :

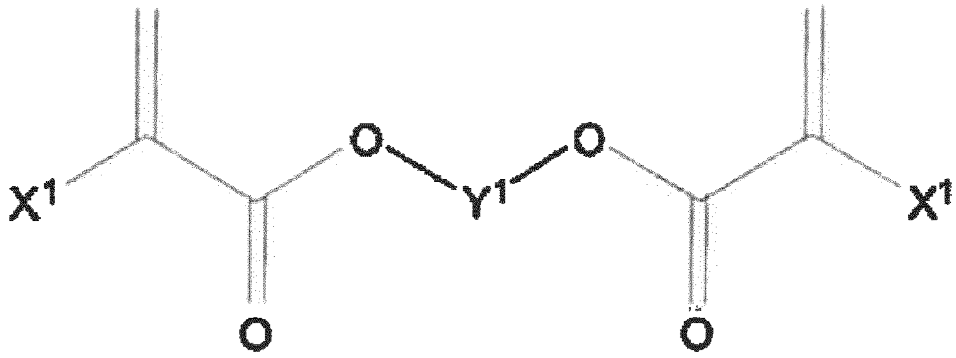

(I)

dans laquelle $X^1$ est sélectionné indépendamment parmi le groupe constitué de l'hydrogène, du méthyle, du monofluorométhyle, du difluorométhyle et du trifluorométhyle, et $Y^1$ représente un groupe fonctionnel hydrocarbure saturé fluoré qui présente éventuellement un ou plusieurs groupes éther, ou un dérivé de monoacrylate, représenté par la formule générale suivante (II) :

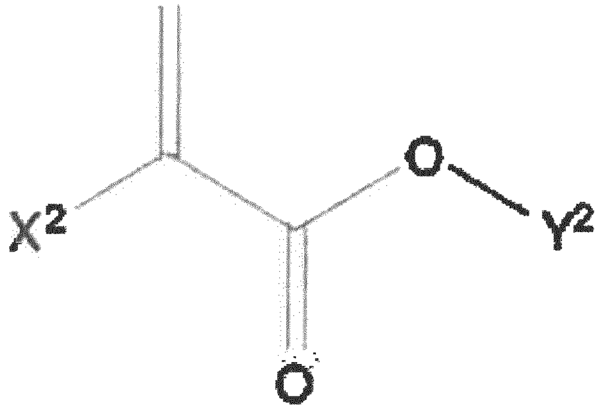

(II)

dans laquelle $X^2$ est sélectionné parmi le groupe constitué de l'hydrogène, du méthyle, du monofluorométhyle, du difluorométhyle et du trifluorométhyle, et $Y^2$ représente un groupe fonctionnel hydrocarbure saturé fluoré qui présente éventuellement un ou plusieurs groupes éther.

6. Mousse polymère nanostructurée hautement fluorée selon une des revendications 1 à 5, dans laquelle la mousse polymère est immergée dans un alcool à l'étape (b).

7. Mousse polymère nanostructurée hautement fluorée selon une des revendications 1 à 6, dans laquelle le séchage de la mousse polymère s'effectue à une température dans la plage de 50 à 100 °C à l'étape (c).

8. Utilisation de la mousse polymère nanostructurée hautement fluorée selon une des revendications 1 à 7 en tant qu'enrobage super répulsif de substrats.

# Figuren

Figur 1

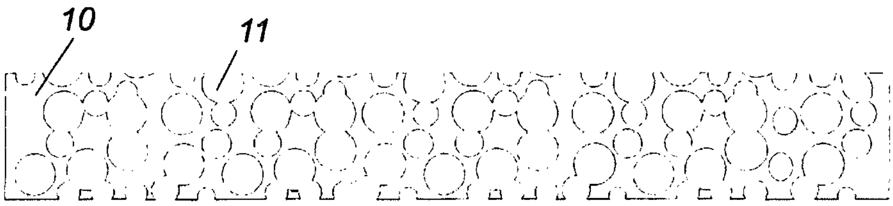


Figur 2

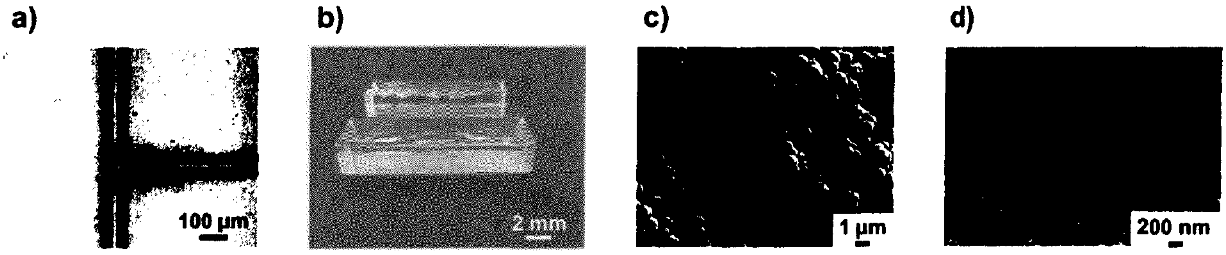

Figur 3

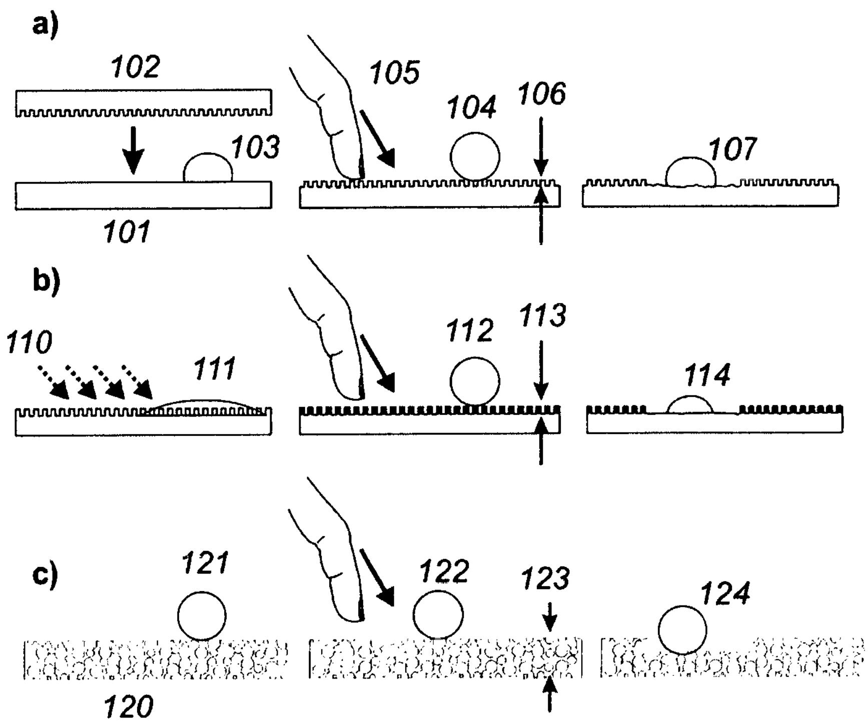


Figur 4

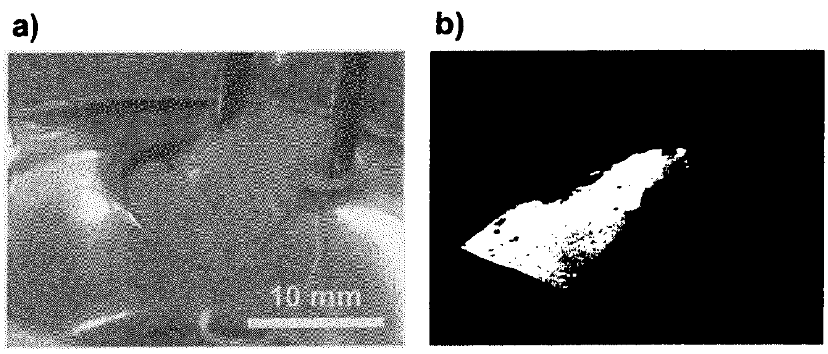

Figur 5

a) b)

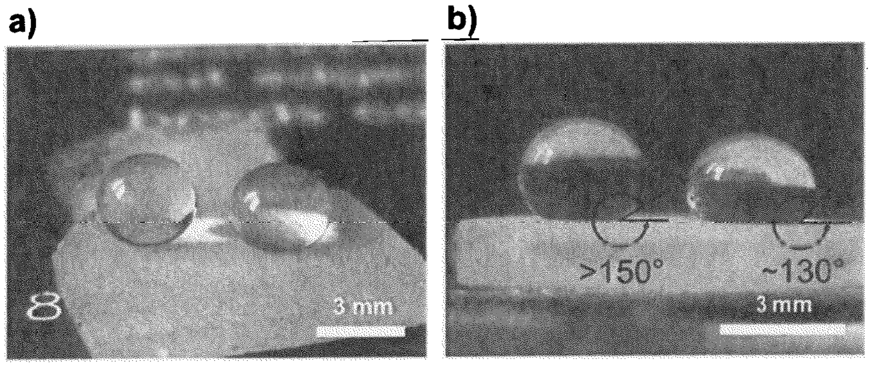


Figur 6

a) b)

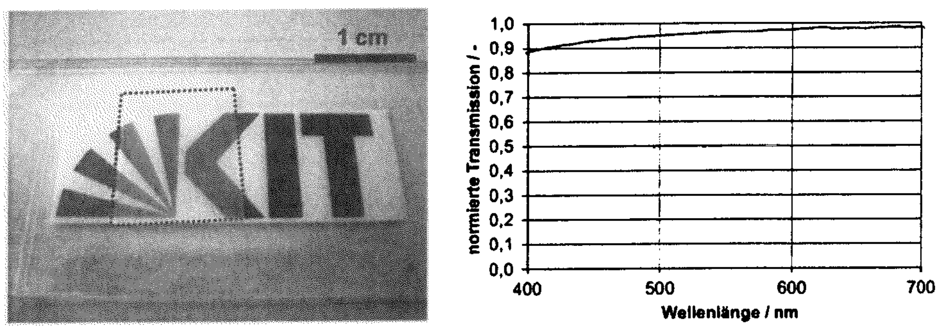

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009118552 A1
- US 20060246297 A1
- US 20060029808 A1
- US 8017234 B2
- US 20110263751 A1
- US 20100004373 A1
- WO 2010018744 A1
- US 20020150723 A1
- US 8137751 B2
- WO 2012012441 A1
- US 8741158 B2
- US 20060024508 A1
- US 20110229667 A1
- US 7985475 B2
- CN 105418837 A


### In der Beschreibung aufgeführte Nicht-Patentliteratur


- **SHAFIEI ; ALPAS.** *Applied Surface Science,* 2009, vol. 256, 710-719
- **TAURINO et al.** *Journal of Colloid and Interface Science,* 2008, vol. 325, 149-156
- **PERRO.** *Colloids and Surfaces A: Physicochemical and Engineering Aspects,* 2006, vol. 284-285, 78-83
- **LI et al.** *Chemical Communications,* 2009, 2730-2732
- **DENG et al.** *Science,* 2012, vol. 335, 67-70
- **VOGELAAR et al.** *Langmuir,* 2006, vol. 22, 3125-3130
- **JIN et al.** *Applied Materials & Interfaces,* 2013, vol. 5, 485-488